# EUROPEAN PATENT SPECIFICATION

(11) **EP 2 060 009 B1**
(45) Date of publication and mention of the grant of the patent: **28.07.2010**
(21) Application number: 07789269.3
(22) Date of filing: 17.08.2007
(51) Int. Cl.: H04B 1/16, H04W 4/00

(54) **WIRELESS DEVICE AND METHOD**
DRAHTLOSE EINRICHTUNG UND VERFAHREN
DISPOSITIF ET PROCÉDÉ DE COMMUNICATION SANS FIL

(30) Priority: 18.08.2006 GB 0616519
(43) Date of publication of application: 20.05.2009
(73) Proprietor: ITI Scotland Limited, Glasgow G2 2LB (GB)
(72) Inventor: WEIR, Alexander, Edinburgh EH28 8LP (GB)
(74) Representative: Rees, Simon John Lewis
(86) International application number: PCT/GB2007/003167
(87) International publication number: WO 2008/020236

(56) References cited:
- US-A1- 2006 171 304
- US-B1- 6 185 423

## Description

### Field of the invention

This invention relates to a wireless device and method. More particularly, the invention relates to a wireless device and method for use in an ultra wideband network, in which network capacity and tolerance to interference are improved using a background scanning technique.

### Background

Ultra-wideband is a radio technology that transmits digital data across a very wide frequency range, 3.1 to 10.6 GHz. By spreading the RF energy across a large bandwidth the transmitted signal is virtually undetectable by traditional frequency selective RF technologies. However, the low transmission power limits the communication distances to typically less than 10 to 15 meters.

There are two approaches to UWB: the time-domain approach, which constructs a signal from pulse waveforms with UWB properties, and a frequency-domain modulation approach using conventional FFT-based Orthogonal Frequency Division Multiplexing (OFDM) over Multiple (frequency) Bands, giving MB-OFDM. Both UWB approaches give rise to spectral components covering a very wide bandwidth in the frequency spectrum, hence the term ultra-wideband, whereby the bandwidth occupies more than 20 per cent of the centre frequency, typically at least 500MHz.

These properties of ultra-wideband, coupled with the very wide bandwidth, mean that UWB is an ideal technology for providing high-speed wireless communication in the home or office environment, whereby the communicating devices are within a range of 20 m of one another.

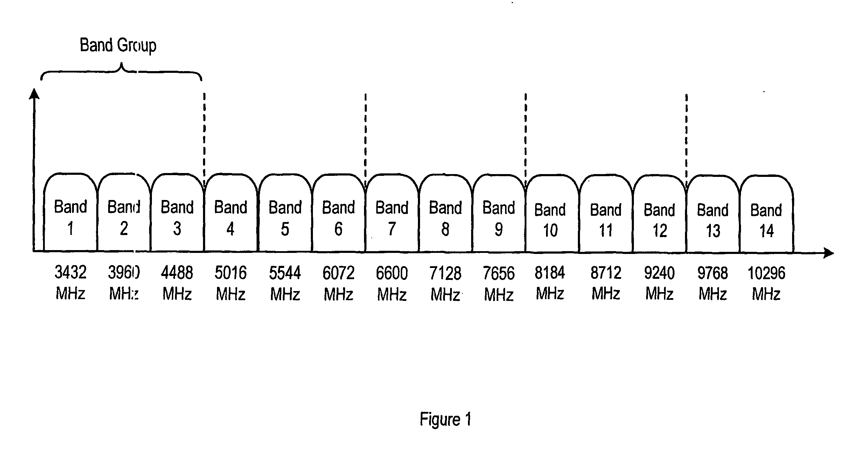

Figure 1 shows the arrangement of frequency bands in a Multi Band Orthogonal Frequency Division Multiplexing (MB-OFDM) system for ultra-wideband communication. The MB-OFDM system comprises fourteen sub-bands of 528 MHz each, and uses frequency hopping every 312 ns between sub-bands as an access method. Within each sub-band OFDM and QPSK or DCM coding is employed to transmit data. It is noted that the sub-band around 5GHz, currently 5.1-5.8 GHz, is left blank to avoid interference with existing narrowband systems, for example 802.11 a WLAN systems, security agency communication systems, or the aviation industry.

The fourteen sub-bands are organised into five band groups, four having three 528 MHz sub-bands, and one band group having two 528 MHz sub-bands. As shown in Figure 1, the first band group comprises sub-band 1, sub-band 2 and sub-band 3. An example UWB system will employ frequency hopping between sub-bands of a band group, such that a first data symbol is transmitted in a first 312.5 ns duration time interval in a first frequency sub-band of a band group, a second data symbol is transmitted in a second 312.5 ns duration time interval in a second frequency sub-band of a band group, and a third data symbol is transmitted in a third 312.5 ns duration time interval in a third frequency sub-band of the band group. Therefore, during each time interval a data symbol is transmitted in a respective sub-band having a bandwidth of 528 MHz, for example sub-band 2 having a 528 MHz baseband signal centred at 3960 MHz.

The technical properties of ultra-wideband mean that it is being deployed for applications in the field of data communications. For example, a wide variety of applications exist that focus on cable replacement in the following environments:
- communication between PCs and peripherals, i.e. external devices such as hard disc drives, CD writers, printers, scanner, etc.
- home entertainment, such as televisions and devices that connect by wireless means, wireless speakers, etc.
- communication between handheld devices and PCs, for example mobile phones and PDAs, digital cameras and MP3 players, etc.

In wireless networks such as UWB networks one or more devices periodically transmit a beacon frame. The main purpose of the beacon frame is to provide for a timing structure on the medium, i.e. the division of time into so-called superframes, and to allow the devices of the network to synchronize with a beacon group.

Background scanning is a technique that is commonly used in wireless networks, and in particular UWB systems, to scan for the presence of other RF activity. Background scanning allows a device to form a "picture" of the RF environment in which it exists.

US 2006/171304 discloses a known system for performing background scanning in a wireless local area network.

From a clear "picture" the device can provide the ability to re-tune the device receiver to a different physical channel (and different band group), allowing the device to background scan for other beacon groups and assess channel quality.

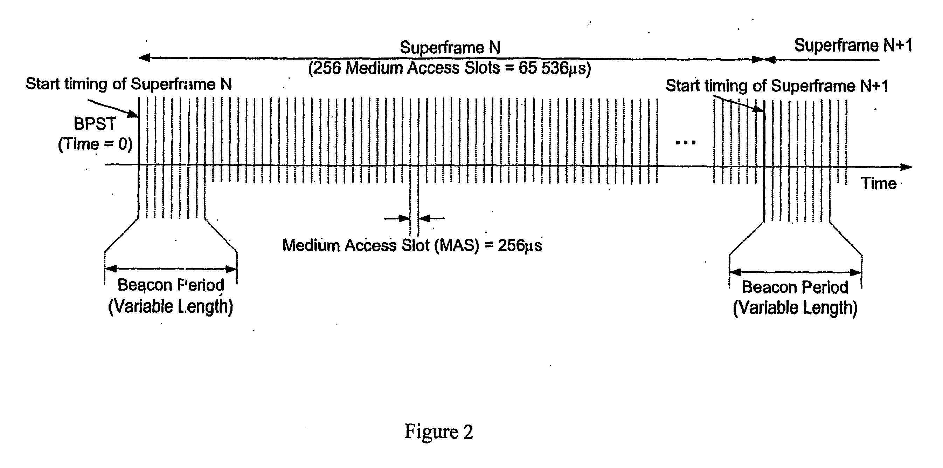

The basic timing structure of a UWB system is a superframe as shown in Figure 2. A superframe according to the European Computer Manufacturers Association standard (ECMA), ECMA-368 second edition, consists of 256 medium access slots (MAS), where each MAS has a defined duration e.g. 256 microseconds. Each superframe starts with a Beacon Period, which lasts one or more contiguous MASs. The start of the first MAS in the beacon period is know as the beacon period start.

It is known to perform background scanning during gaps in active transmission or reception. Such scanning is normally scheduled for periods of the superframe where other devices have slot reservations or at opportune moments where a device attempts to complete background scanning without signalling to other devices in the beacon group.

There are numerous disadvantages to using the techniques outlined above. For example, the scanning period may be so restricted that this will limit the opportunities for physical channel re-tuning outside of the existing band group due to receiver settling times. Also, by performing scanning at opportune moments, there is a possibility a device may drop packets.

It is an aim of the present invention to provide a wireless device and method for background scanning, which does not suffer from the disadvantages mentioned above.

### Summary of the invention

According to a first aspect of the present invention, there is provided a method of performing background scanning of one or more radio channels on a first wireless device in a wireless network. The method comprises the steps of sending a signal to one or more other devices connected to the wireless network informing them of the intention of the first device to enter a pre-defined hibernation mode, and performing background scanning of the one or more radio channels whilst the one or more other devices on the network consider the first device to be in a hibernation mode.

According to another aspect of the present invention, there is provided a wireless device for performing background scanning of one or more radio channels in a wireless network. The wireless device comprises a transceiver, adapted to transmit a signal to one or more other devices on the network, the signal indicative that the device is intending to enter a pre-defined hibernation mode. The wireless device is further adapted to perform background scanning of the one or more radio channels when the one or more other devices consider the device to be in a hibernation mode.

The invention uses the hibernation mode as an opportunity to schedule background scanning. Rather than entering power saving mode, the device actively scans other physical channels, through taking advantage of the existing hibernation signalling and protocols.

### Brief description of the drawings

For a better understanding of the present invention, and to show more clearly how it may be carried into effect, reference will now be made, by way of example only, to the following drawings in which:
Figure 1 shows the multi-band OFDM alliance (MBOA) approved frequency spectrum of a MB-OFDM system;
Figure 2 shows a superframe structure according to the ECMA standard;
Figure 3 is a high-level activity diagram which describes conventional operation of a wireless network device; and
Figure 4 is a high-level activity diagram which describes the operation of a receiver device according to the present invention.

### Detailed description of a preferred embodiment of the present invention

It is important that a portable wireless device is able to maintain power efficiency and maximise the lifetime of its battery. An effective method of extending battery life is to enable a device to manage its power consumption by operating in a reduced power mode, or turning off certain circuit components for long periods of time relative to a superframe. Such a reduced power mode of operation is known as hibernation in the context of MB-OFDM UWB systems

Most wireless technologies provide two power modes: an active mode and a hibernation mode. During the active mode, wireless devices are expected to be available to transmit and receive frames as required to maintain involvement in the superframe. In the low-power or hibernation mode, the wireless device is required to suspend all RF involvement in the superframe, but maintain superframe synchronization and membership of the beacon group.

Devices are required to be available to transmit and receive beacon frames during the beacon period. Control, command and data frames are required to be transmitted and received during other slots in the superframe and are used to participate in the superframe also.

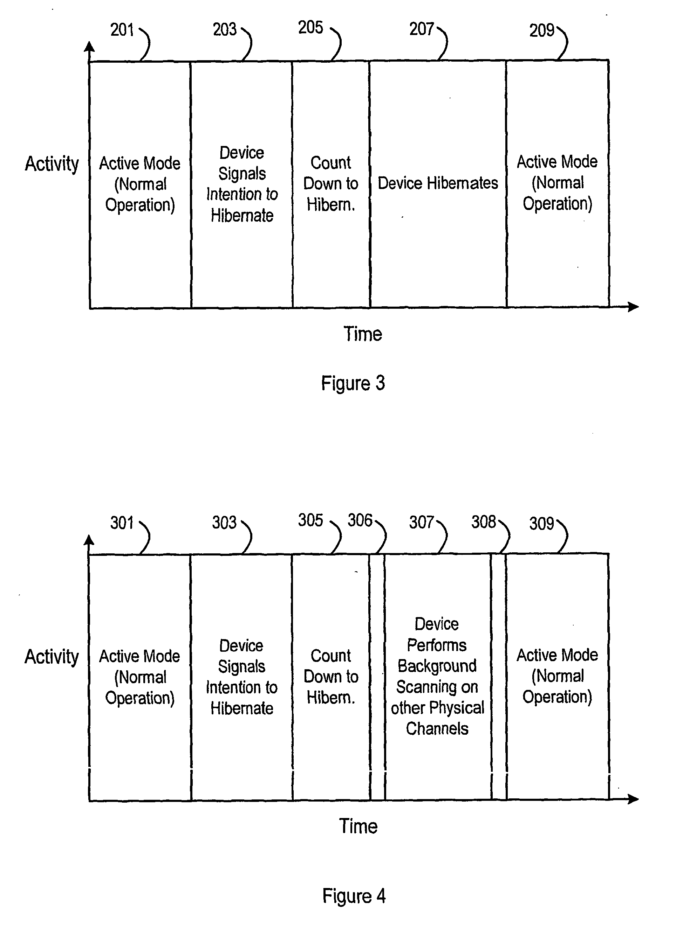

Figure 3 is a high-level activity diagram which better describes conventional operation of a wireless network device.

During the active mode of operation, 201, the device is expected to transmit beacon frames and participate in normai transmit and receive operations on the medium. At some point a device management entity will request that the Medium Access Controller (MAC) cease all operations on the medium, including the suspension of beacon transmissions. This request will normally contain a count down parameter, which represents the number of superframes relative to the current superframe before the device should enter the hibernation state. The request will also contain a duration parameter, which represents the number of superframes that the device should maintain its hibernation state for. On receiving such a request the MAC will include a Hibernation Mode information element (IE) in its next beacon frame such that it can coordinate its behaviour with other devices in the beacon group. A device may decide to enter the hibernation mode, for example, when it has no data to either send or receive.

At this point the device must signal to all neighbouring devices in the beacon group of its intention to enter the hibernation mode, period 203. At the end of the count down period 205, the device then hibernates for a period 207. After expiry of the hibernation period the device wakes up, and resumes normal operation during period 209.

Figure 4 is a high-level activity diagram which describes the operation of a wireless device according to the present invention.

As in Figure 3, the device starts in an active mode of operation during period 301, whereby the device is transmitting and receiving packets of information normally. On receiving an instruction to perform background scanning, the wireless device signals to other devices on the network that it intends to hibernate, period 303. It is noted that the instruction to perform background scanning can be provided from a device management entity. However, it will also be appreciated that this request can come from other sources, such as from the device management entity as a result of a request from a higher layer on the wireless device, or automatically from the device management entity as a result of some additional algorithm for periodically performing background scanning in order to maximise quality of service metrics and co-existence in the presence of background interference from accidental interferers.

The device again waits for a specified time, period 305, before entering the hibernation mode. However, after waiting for this specified time, instead of actually entering the hibernation mode as indicated to other devices in the network, the device performs a background scanning operation during period 307.

The background scanning operation will involve changing physical channels and, on occasions, band group. When changing physical channels there will be a period of settling time to allow re-tuning of the device receiver to a different physical channel. The duration of this settling period will be variable depending on the radio characteristics and the band group jump differential. This settling time 306, 308, is shown on either side of the background scanning period 307 of Figure 4. It will be appreciated that the device may change physical channels a plurality of times during the period 307, each having its own settling time 306 and 308.

After background scanning is completed, the device then returns to an active mode of operation, period 309, and again transmits and receives packets normally. The information gained during the background scanning operation will be used in the conventional manner for such data. For example, the information gained during the background scanning operation can be used to determine signal qualities on other physical channels, to determine whether a channel change would be likely to improve the current channel conditions, i.e. provide a better quality of service and minimise RF interference. The background scanning data can also be used in relation to other functions, such as the "Detect and Avoid" function employed in UWB systems, interference mitigation, and improving coexistence with other wireless technologies and accidental interferers. The background scanning information can also be used to improve Quality of Service and channel characteristics by reducing the likelihood of receiving packet errors and incurring re-transmissions, resulting in benefits to the maximum data rate and power efficiency.

Thus the present invention has several advantages over the prior art. For example, by employing a pre-defined hibernation mode of the wireless system, the invention allows a device to perform background scanning without requiring a new protocol or instructions, and is therefore applicable to many different wireless standards. In other words, the invention makes use of the existing protocols that exist for placing a device in hibernation mode, but instead of entering the hibernation mode, the device will instead perform a background scan operation on a different physical channel.

While the device is background scanning, the other devices on the network do not attempt to send packets to the device, as they consider the device to be in the hibernation mode. Thus, no packets of information will be missed by a device performing background scanning at inopportune moments. The present invention improves network capacity though reduction of unwanted transmission and hence further incidental interference.

It will be appreciated that the period of time 307 that the device performs the background scanning can be predetermined, i.e. corresponding to a predetermined time that the device has indicated to other network devices that it will be in the hibernation mode, or can vary depending on how long it takes the device to perform the background scanning operation. Preferably, the predetermined period of time is an integer number of superframes, i.e. one or more superframes.

It will also be appreciated that the term hibernation mode is intended to embrace other predefined low-power modes of operation, when a device informs neighbouring devices that it intends entering a pre-defined sleep state using a defined protocol.

It is noted that the invention described above uses the hibernation mode as an opportunity to schedule background scanning. Rather than entering a power saving mode, the device actively scans other physical channels, through taking advantage of the existing hibernation signalling and protocols. For example, the ECMA specification defines the procedures for entering and waking from the hibernation mode, and compliant devices must therefore follow these procedures. The invention is compliant with the ECMA specification since it does not send any beacon/command/control/data frame during the hibernation period. In other words, since the background scanning operations are "receive" operations, the invention operates within the parameters of the ECMA specification.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim and "a" or "an" does not exclude a plurality. Any reference signs in the claims shall not be construed so as to limit their scope.

## Claims

1. A method of performing background scanning of one or more radio channels on a first wireless device in a wireless network, the method comprising the steps of:
sending a signal to one or more other devices connected to the wireless network informing them of the intention of the first device to enter a pre-defined hibernation mode; and **characterised by** the step of
performing background scanning of the one or more radio channels whilst the one or more other devices on the network consider the first device to be in a hibernation mode.

2. A method as claimed in claim 1, wherein the step of sending a signal to one or more other devices comprises using standard hibernation protocols that are normally used for entering the hibernation mode.

3. A method as claimed in claim 1 or 2, wherein the step of performing background scanning is performed after a predetermined period of time.

4. A method as claimed in claim 3, wherein the predetermined period corresponds to a count down period associated with entering the hibernation mode.

5. A method as claimed in any one of the preceding claims, wherein the one or more radio channels scanned by the device are different to the channel over which standard communication takes place in the network.

6. A method as claimed in any one of the preceding claims, wherein the step of background scanning is performed for a predetermined period of time.

7. A method as claimed in claim 6, wherein the predetermined time corresponds to an integer multiple of a superframe.

8. A wireless device for performing background scanning of one or more radio channels in a wireless network, comprising:
a transceiver, adapted to transmit a signal to one or more other devices on the network, the signal indicative that the device is intending to enter a pre-defined hibernation mode and, **characterised in that** the transceiver is further adapted to perform background scanning of the one or more radio channels when the one or more other devices consider the device to be in a hibernation mode.

9. A device as claimed in claim 8, wherein the device is further adapted to send a signal to one or more other devices using standard hibernation protocols that are normally used for entering the hibernation mode.

10. A device claimed in claim 8 or 9, wherein the device is configured to perform background scanning after a predetermined period of time.

11. A device as claimed in claim 10, wherein the predetermined period corresponds to a count down period associated with entering the hibernation mode.

12. A device as claimed in any one of claims 8 to 11, wherein the one or more radio channels scanned by the device are different to the channel over which standard communication takes place in the network.

13. A device as claimed in any one of claims 8 to 12, the device being further adapted to perform background scanning for a predetermined period of time.

14. A device as claimed in claim 13, wherein the predetermined time corresponds to an integer multiple of a superframe.

## Patentansprüche

1. Verfahren zum Ausführen einer Hintergrundsuche in einem oder mehreren Hochfrequenzkanälen auf einer ersten drahtlosen Vorrichtung in einem drahtlosen Netz, wobei das Verfahren die Schritte umfasst:
das Senden eines Signals an eine oder mehrere andere Vorrichtungen, die mit dem drahtlosen Netz verbunden sind, das die Vorrichtungen über die Absicht der ersten Vorrichtung informiert, in einen vordefinierten Ruhemodus einzutreten; und das Verfahren durch den Schritt **gekennzeichnet** ist:
das Ausführen der Hintergrundsuche in dem einem oder den mehreren Hochfrequenzkanälen während die eine oder mehreren anderen Vorrichtungen auf dem Netz davon ausgehen, dass sich die erste Vorrichtung in einem Ruhemodus befindet.

2. Verfahren nach Anspruch 1, wobei der Schritt des Sendens eines Signals an eine oder mehrere andere Vorrichtungen den Gebrauch von Standard-Ruhezustands-Protokollen umfasst, die man normalerweise für den Eintritt in den Ruhemodus verwendet.

3. Verfahren nach Anspruch 1 oder 2, wobei der Schritt des Ausführens der Hintergrundsuche nach einer vorbestimmten Zeitperiode vorgenommen wird.

4. Verfahren nach Anspruch 3, wobei die vorbestimmte Zeitperiode einer Herunterzählperiode entspricht, die dem Eintritt in den Ruhemodus zugeordnet ist.

5. Verfahren nach irgendeinem der vorhergehenden Ansprüche, wobei sich der eine oder die mehreren Hochfrequenzkanäle, die die Vorrichtung absucht, von dem Kanal unterscheiden, über den die Standardkommunikation in dem Netz erfolgt.

6. Verfahren nach irgendeinem der vorhergehenden Ansprüche, wobei der Schritt der Hintergrundsuche über eine vorbestimmte Zeitperiode vorgenommen wird.

7. Verfahren nach Anspruch 6, wobei die vorbestimmte Zeitspanne einem ganzzahligen Vielfachen eines Superframes entspricht.

8. Drahtlose Vorrichtung zum Ausführen einer Hintergrundsuche für einen oder mehrere Hochfrequenzkanäle in einem drahtlosen Netz, umfassend:
einen Transceiver, der dafür ausgelegt ist, ein Signal an eine oder mehrere andere Vorrichtungen auf dem Netz zu übertragen, wobei das Signal anzeigt, dass die Vorrichtung beabsichtigt, in einen vordefinierten Ruhemodus einzutreten, und der Transceiver **dadurch gekennzeichnet ist, dass** er ferner dafür ausgelegt ist, die Hintergrundsuche auf dem einen oder den mehreren Hochfrequenzkanälen auszuführen, wenn die eine oder mehreren anderen Vorrichtungen davon ausgehen, dass sich die Vorrichtung in einem Ruhemodus befindet.

9. Vorrichtung nach Anspruch 8, wobei die Vorrichtung zudem dafür ausgelegt ist, ein Signal an die eine oder mehreren anderen Vorrichtungen mit Hilfe von Standard-Ruhezustands-Protokollen zu senden, die man normalerweise für den Eintritt in den Ruhemodus verwendet.

10. Vorrichtung nach Anspruch 8 oder 9, wobei die Vorrichtung dafür konfiguriert ist, die Hintergrundsuche nach einer vorbestimmten Zeitperiode vorzunehmen.

11. Vorrichtung nach Anspruch 10, wobei die vorbestimmte Periode einer Herunterzählperiode entspricht, die dem Eintritt in den Ruhemodus zugeordnet ist.

12. Vorrichtung nach irgendeinem der Ansprüche 8 bis 11, wobei sich der eine oder die mehreren von der Vorrichtung abgesuchten Hochfrequenzkanäle von dem Kanal unterscheiden, über den die Standardkommunikation in dem Netz erfolgt.

13. Vorrichtung nach irgendeinem der Ansprüche 8 bis 12, wobei die Vorrichtung weiterhin dafür ausgelegt ist, die Hintergrundsuche für eine vorbestimmte Zeitperiode auszuführen.

14. Vorrichtung nach Anspruch 13, wobei die vorbestimmte Zeitspanne einem ganzzahligen Vielfachen eines Superframes entspricht.

## Revendications

1. Procédé d'exécution d'un balayage en arrière-plan d'un ou plusieurs canaux radio sur un premier dispositif sans fil dans un réseau sans fil, le procédé comprenant les étapes consistant à :
envoyer à un ou plusieurs autres dispositifs connectés au réseau sans fil un signal les informant de l'intention du premier dispositif à entrer dans un mode hibernation prédéfini ; et **caractérisé par** l'étape consistant à :
exécuter un balayage en arrière-plan du ou des canaux radio tandis que le ou les autres dispositifs présents sur le réseau considèrent le premier dispositif comme étant dans un mode hibernation.

2. Procédé selon la revendication 1, dans lequel l'étape d'envoi d'un signal à un ou plusieurs autres dispositifs comprend l'utilisation de protocoles d'hibernation standards qui sont normalement utilisés pour entrer au mode hibernation.

3. Procédé selon la revendication 1 ou 2, dans lequel l'étape d'exécution d'un balayage en arrière-plan est exécutée après une période de temps prédéterminée.

4. Procédé selon la revendication 3, dans lequel la période prédéterminée correspond à une période de décompte associée à l'entrée au mode hibernation.

5. Procédé selon l'une quelconque des revendications précédentes, dans lequel le ou les canaux radio balayés par le dispositif sont différents du canal sur lequel se déroule une communication standard sur le réseau.

6. Procédé selon l'une quelconque des revendications précédentes, dans lequel l'étape de balayage en arrière-plan est exécutée pendant une période de temps prédéterminée.

7. Procédé selon la revendication 6, dans lequel la période de temps prédéterminée correspond à un entier multiple d'une supertrame.

8. Dispositif sans fil pour l'exécution d'un balayage en arrière-plan d'un ou plusieurs canaux radio dans un réseau sans fil, comprenant :
un émetteur, adapté pour émettre un signal à destination d'un ou plusieurs autres dispositifs présents sur le réseau, le signal indiquant que le dispositif a l'intention d'entrer dans un mode hibernation prédéfini, et **caractérisé en ce que** l'émetteur est en outre adapté pour exécuter un balayage en arrière-plan du ou des canaux radio lorsque le ou les autres dispositifs considèrent le dispositif comme étant dans un mode hibernation.

9. Dispositif selon la revendication 8, lequel dispositif est en outre adapté pour envoyer un signal à un ou plusieurs autres dispositifs à l'aide de protocoles d'hibernation standards qui sont normalement utilisés pour entrer au mode hibernation.

10. Dispositif selon la revendication 8 ou 9, lequel dispositif est configuré pour exécuter un balayage en arrière-plan après une période de temps prédéterminée.

11. Dispositif selon la revendication 10, dans lequel la période de temps prédéterminée correspond à une période de décompte associée à l'entrée au mode hibernation.

12. Dispositif selon l'une quelconque des revendications 8 à 11, dans lequel le ou les canaux radio balayés par le dispositif sont différents du canal sur lequel se déroule une communication standard sur le réseau.

13. Dispositif selon l'une quelconque des revendications 8 à 12, lequel dispositif est en outre adapté pour exécuter un balayage en arrière-plan pendant une période de temps prédéterminée.

14. Dispositif selon la revendication 13, dans lequel la période de temps prédéterminée correspond à un entier multiple d'une supertrame.
